# EUROPEAN PATENT SPECIFICATION

(11) **EP 4 156 392 B1**
(45) Date of publication and mention of the grant of the patent: **23.07.2025**
(21) Application number: 21198462.0
(22) Date of filing: 23.09.2021
(51) Int. Cl.: H01M 50/213, H01M 50/20, H01M 50/22, H01M 50/242, H01M 50/244

(54) **BATTERY CELL HOLDER FOR TRANSPORT OF BATTERY CELLS AND A BATTERY PACK COMPRISING THE SAME**
BATTERIEZELLENHALTER ZUM TRANSPORT VON BATTERIEZELLEN UND BATTERIEPACK DAMIT
SUPPORT DE CELLULE DE BATTERIE POUR LE TRANSPORT DE CELLULES DE BATTERIE ET BLOC-BATTERIE LE COMPRENANT

(43) Date of publication of application: 29.03.2023
(73) Proprietor: Samsung SDI Co., Ltd., Yongin-si, Gyeonggi-do 17084 (KR)
(72) Inventor: Hadler, Bernhard, 8073 Feldkirchen/Graz (AT)
(74) Representative: Gulde & Partner

(56) References cited:
- US-A1- 2019 334 140
- US-A1- 2020 144 658
- US-A1- 2020 212 384

## Description

### Field of the Disclosure

The present disclosure relates to a battery cell holder for transport of battery cells, a battery pack comprising the same and a method for manufacturing the battery pack.

### Technological Background

In the recent years, vehicles for transportation of goods and peoples have been developed using electric power as a source for motion. Such an electric vehicle is an automobile that is propelled by an electric motor, using energy stored in rechargeable batteries. An electric vehicle may be solely powered by batteries or may be a form of hybrid vehicle powered by for example a gasoline generator. Furthermore, the vehicle may include a combination of electric motor and conventional combustion engine. In general, an electric-vehicle battery, EVB, or traction battery is a battery used to power the propulsion of battery electric vehicles, BEVs. Electric-vehicle batteries differ from starting, lighting, and ignition batteries because they are designed to give power over sustained periods of time. A rechargeable or secondary battery differs from a primary battery in that it can be repeatedly charged and discharged, while the latter provides only an irreversible conversion of chemical to electrical energy. Low-capacity rechargeable batteries are used as power supply for small electronic devices, such as cellular phones, notebook computers and camcorders, while high-capacity rechargeable batteries are used as the power supply for electric and hybrid vehicles and the like.

In general, rechargeable batteries include an electrode assembly including a positive electrode, a negative electrode, and a separator interposed between the positive and negative electrodes, a case receiving the electrode assembly, and an electrode terminal electrically connected to the electrode assembly. An electrolyte solution is injected into the case in order to enable charging and discharging of the battery via an electrochemical reaction of the positive electrode, the negative electrode, and the electrolyte solution. The shape of the case, e.g. cylindrical or rectangular, depends on the battery's intended purpose. Lithium-ion (and similar lithium polymer) batteries, widely known via their use in laptops and consumer electronics, dominate the most recent group of electric vehicles in development.

Rechargeable batteries may be used as a battery module formed of a plurality of unit battery cells coupled in series and/or in parallel so as to provide a high energy content, in particular for motor driving of a hybrid vehicle. That is, the battery module is formed by interconnecting the electrode terminals of the plurality of unit battery cells depending on a required amount of power and in order to realize a high-power rechargeable battery.

Battery modules can be constructed either in block design or in modular design. In block designs each battery is coupled to a common current collector structure and a common battery management system and the unit thereof is arranged in a housing. In modular designs, pluralities of battery cells are connected to form submodules and several submodules are connected to form the battery module. In automotive applications, battery systems often consist of a plurality of battery modules connected in series for providing a desired voltage. Therein, the battery modules may comprise submodules with a plurality of stacked battery cells, each stack comprising cells connected in parallel that are connected in series (*XpYs*) or multiple cells connected in series that are connected in parallel (*XsYp*)*.*

A battery pack is a set of any number of (preferably identical) battery modules. They may be configured in a series, parallel or a mixture of both to deliver the desired voltage, capacity, or power density. Components of battery packs include the individual battery modules, and the interconnects, which provide electrical conductivity between them.

The mechanical integration of such a battery pack requires appropriate mechanical connections between the individual components, e.g. of battery modules, and between them and a supporting structure of the vehicle. These connections must remain functional and save during the average service life of the battery system. Further, installation space and interchangeability requirements must be met, especially in mobile applications.

Mechanical integration of battery modules may be achieved by providing a carrier framework and by positioning the battery modules thereon. Fixing the battery cells or battery modules may be achieved by fitted depressions in the framework or by mechanical interconnectors such as bolts or screws. Alternatively, the battery modules are confined by fastening side plates to lateral sides of the carrier framework. Further, cover plates may be fixed atop and below the battery modules.

The carrier framework of the battery pack is mounted to a carrying structure of the vehicle. In case the battery pack shall be fixed at the bottom of the vehicle, the mechanical connection may be established from the bottom side by for example bolts passing through the carrier framework of the battery pack. The framework is usually made of aluminum or an aluminum alloy to lower the total weight of the construction.

Battery systems according to the prior art, despite any modular structure, usually comprise a battery housing that serves as enclosure to seal the battery system against the environment and provides structural protection of the battery system's components. Housed battery systems are usually mounted as a whole into their application environment, e.g. an electric vehicle. Thus, the replacement of defect system parts, e.g. a defect battery submodule, requires dismounting the whole battery system and removal of its housing first. Even defects of small and/or cheap system parts might then lead to dismounting and replacement of the complete battery system and its separate repair. As high-capacity battery systems are expensive, large and heavy, said procedure proves burdensome and the storage, e.g. in the mechanic's workshop, of the bulky battery systems becomes difficult.

According to the state of the art battery cells and in particular cylindrical battery cells are placed robotically into a transportation box at a cell production factory for transporting the battery cells. At the battery plant or battery (pack) factory the battery cells will be unboxed as well robotically. The package material and the box will have to be entirely disposed.

However, this process wastes packaging and box material, since none of the material can be used when inserting the battery cells into the compartments of a battery pack. Further, at the battery factory, the battery cells have to be processed individually during packaging before the transport and especially during unpackaging after the transport.

It is thus an object of the present disclosure to overcome or reduce at least some of the drawbacks of the prior art and to provide a battery cell holder which can be reused for the battery pack and in the manufacture of the battery pack to save packaging material. Further, it is an object of the invention provide a more efficient manufacturing process.

US 2019/334140 A1 teaches a light and robust battery holding device having a foam support for carrying the battery cells with cooling ducts. The US 2020/212384 A1 discloses a battery packaging assembly including a foam layer on the bottom of the pack carrier. The US 2020/144658 A1 teaches a battery packaging assembly including a foam block with recesses to engage with battery cells.

### Summary of Invention

Embodiments of the present disclosure seek to solve at least one of the problems existing in the prior art to at least some extent. In particular, a battery cell holder for transport of a plurality of battery cells according to the invention is provided in claim 1 of the appended set of claims. The battery cell holder may be also referred to as a battery cell transport unit. The term foam plate means in other words that the foam plate is made of foam material. The plate may also referred to as a pad or transportation pad. The plate entirely consists of foam material.

However, since the foam material comprises pockets, these pockets may for example comprise adhesive. The foam may be a foam rubber, i.e. a cellular or a sponge. The foam may comprise an air-filled matrix structure. The foam may be for example based on silicone, polyurethane or other organic materials. The foam material is compressible, typically 50 to 70% with a compression pressure below 0.4 N/mm², i.e. a soft foam. The foam material can thus protect and stabilize the battery cells during transport as it absorbs for example vibrations and shocks. The battery cell holder has the advantage that the foam plate can be reused in the process of inserting the battery cells into compartments of a battery pack carrier to manufacture a battery pack. The foam plate thus serves multiple purposes, namely stabilizing and protecting the battery cells during transport and for holding the cells in the battery pack. Thus, the foam provides transport protection. The battery cell holder is therefore suitable for transport as well as for insertion in the battery pack. Thus, the foam plate after transport does not have to be disposed. It is a further advantage that the battery cells do not have to be individually untaken to place them into the carrier compartments of the battery pack since they can be processed by using the foam plate as a whole. The plate is thus reused to stack the cells into the compartment and becomes part of the battery pack. Transportation material waste is therefore reduced. Further, the first holes may be pre-arranged and oriented in a manner as required for the battery pack such that the battery cells are already in the correct position.

Preferably, the first holes may be circular and the battery cells may be cylindrical. The battery cells can thus be placed in the first holes of the foam material. The foam material due to its mechanical properties covers and protects every individual cylindrical battery cell from each other.

The plate comprises a plurality of second holes having a second diameter less than a first diameter of the first holes. These second holes are used to insert an adhesive in there. An adhesive is disposed in the second holes. When the foam material is compressed, i.e. before inserting into the battery pack, the adhesive is pressed into the foam to stabilize the battery cells in the foam material. The foam is an open-cell foam. The adhesive thus permeates through the foam material in response to the foam plate being compressed. The adhesive may also be a solid configured to melt under compression. This is particularly suitable as solution before transport.

The adhesive may be a liquid. Thus, the adhesive diffuses through the foam material in response to an exerted compressive force. The adhesive may preferably be a liquid resin. The liquid adhesive may be injected into the second holes by an injection device having an injection nozzle.

The second holes may be located at inner spaces formed by at least three neighboring first holes. Thus, the adhesive in response to an exerted compressive force bonds the battery cells in the first holes by entering into the first holes through the foam material.

The inner space may be square, quadrangular or triangular, and the second hole is located at a center thereof. Thus, sufficient space to perform the injection of the adhesive may be provided, i.e. to guide an injection nozzle to the second hole. Further, the adhesive will be efficiently distributed to the battery cells and the first holes thereof in order to provide stability and bonding of the battery cells in the first holes.

According to another aspect to the present disclosure, a battery cell transport device according to claim 7 is disclosed comprising a battery cell holder as disclosed. The battery cell transport device may comprise additional outer packaging or framing material around the battery cell holder. The battery cell transport device has the same technical advantages as the battery cell holder. The entire battery cell holder of the device can be reused for the manufacture of the battery pack and the handling of individual battery cells is not required.

According to another aspect of the present disclosure, a battery pack according to claim 8 is disclosed comprising a carrier including a plurality of compartments and at least one battery cell holder according to embodiments of the disclosure, wherein the battery cell holder is disposed in a compartment. Thus, the battery pack reuses the battery cell holder of the battery cell transport device and in particular the entire foam material to hold the battery cells. Thus, the battery pack has the advantage of being more efficient to manufacture with producing less disposable material and avoiding the handling of individual battery cells.

The battery cell holder may be disposed in the compartment in a manner that the compartment exerts a compression force on the plate. Therefore, the compartments may improve to hold and support the battery cells inserted therein. Thus, the battery cells may be strongly held in place in the first holes of the foam material. Further, the adhesive may be distributed from the second holes into the main body, i.e. the foam matrix, of the foam material and to the first holes in which the battery cells are inserted to bond or glue the battery cells to the first holes.

According to another aspect of the present disclosure, a method of manufacturing a battery pack according to claim 10 is provided. The method comprises a step a) of providing at least one battery cell holder according to embodiments of the disclosure. In a further step, the method comprises the step of b) compressing the battery cell holder. In a further step, the method comprises the step of c) inserting the compressed battery cell holder into a compartment. The method may be repeated until each compartment is filled with a battery cell holder. The battery cell holder including the compressible foam plate can be entirely used for the manufacturing of the battery pack acting as cell holder in the battery pack. Thus, the plate does not have to be wasted and the battery cells do not have to be individually removed from the transport device. Thus, manufacturing is more efficient and waste of transportation material is reduced.

The compressing of the battery cell holder may be performed by a frame that is pressed against at least two side panels of the plate. The frame may be an assembly frame. Thus, the foam plate and each of the panels can be compressed from all sides.

In a further step the method may comprise the positioning of the battery cell transportation unit above the compartment and pressing the battery cell holder to release the battery cell holder from the frame and to insert the battery cell holder in the compartment. The pressing may be performed by a press tool which can press the battery cell holder out of the frame. Thus, restoring of the compressed state may be prevented to install the battery cell holder in the compartment in a compressed state. Also the compartment may compress the foam plate to provide stiffness and strong bonding of the battery cells.

The step of providing at least one battery cell holder for transport may be performed at a first location, wherein the method comprises the step of transporting the battery cell holder by a transport vehicle from the first location to a second location different from the first location to perform step c) at the second location. The first location may be at a battery cell factory, in which the battery cells are manufactured. The second location may be at a battery pack factory, battery plant, in which the battery pack is manufactured. The transport vehicle may be a vehicle, a truck, a train, an airplane, for example. Thus, the method makes use of that the batter cell holder can be used for transport as well as for inserting into the batter pack. Thus, the plate does not have to be wasted and the battery cells do not have to be individually removed from the transport device.

The step of compressing the battery cell holder may be performed at the second location. Then, the transport is compression-free and the foam material acts as soft transport protection. After compression, the foam is stiffened and the battery cells are stably held in the first holes of the foam material in the pack. Also, the adhesive may be distributed in the foam material to form a strong bond of the battery cells in the first holes.

The advantage of reusing of the foam material is achieved by the method. For transport, the foam plate stabilizes and protects the battery cells, since the foam material is compressible. Additionally, the battery cells do not have to be singly removed to place them into the carrier compartments of the battery pack. It can be directly reused to stack the cells into the compartment.

In a further aspect of the invention, a vehicle including a battery pack according to claim 15 is provided.

Further aspects of the present disclosure could be learned from the dependent claims or the following description.

### Brief Description of the Drawings

Features will become apparent to those of ordinary skill in the art by describing in detail exemplary embodiments with reference to the attached drawings in which:
- Fig. 1: illustrates a schematic perspective view of a battery cell holder for transport according to an embodiment not covered by the appended set of claims;
- Fig. 2: illustrates a partial enlarged perspective view of a battery cell holder for transport and according to an embodiment of the invention;
- Fig. 3: illustrates a schematic perspective view of a battery cell holder and a batter cell transportation device according to an embodiment of the invention;
- Fig. 4: illustrates a schematic perspective view of a battery pack according to an embodiment of the invention; and
- Figs. 5A-5D: illustrate methods of manufacturing a battery pack according to embodiments of the invention.

### Detailed Description of the Invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art. The invention is defined by the claims.

Accordingly, processes, elements, and techniques that are not considered necessary to those having ordinary skill in the art for a complete understanding of the aspects and features of the present disclosure may not be described. In the drawings, the relative sizes of elements, layers, and regions may be exaggerated for clarity.

As used herein, the term "and/or" includes any and all combinations of one or more of the associated listed items. Further, the use of "may" when describing embodiments of the present disclosure refers to "one or more embodiments of the present disclosure." In the following description of embodiments of the present disclosure, the terms of a singular form may include plural forms unless the context clearly indicates otherwise.

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present disclosure.

It will be further understood that the terms "include," "comprise," "including," or "comprising" specify a property, a region, a fixed number, a step, a process, an element, a component, and a combination thereof but do not exclude other properties, regions, fixed numbers, steps, processes, elements, components, and combinations thereof.

It will also be understood that when a film, a region, or an element is referred to as being "above" or "on" another film, region, or element, it can be directly on the other film, region, or element, or intervening films, regions, or elements may also be present.

Herein, the terms "upper" and "lower" are defined according to the z-axis. For example, the upper cover is positioned at the upper part of the z-axis, whereas the lower cover is positioned at the lower part thereof. In the drawings, the sizes of elements may be exaggerated for clarity. For example, in the drawings, the size or thickness of each element may be arbitrarily shown for illustrative purposes, and thus the embodiments of the present disclosure should not be construed as being limited thereto.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

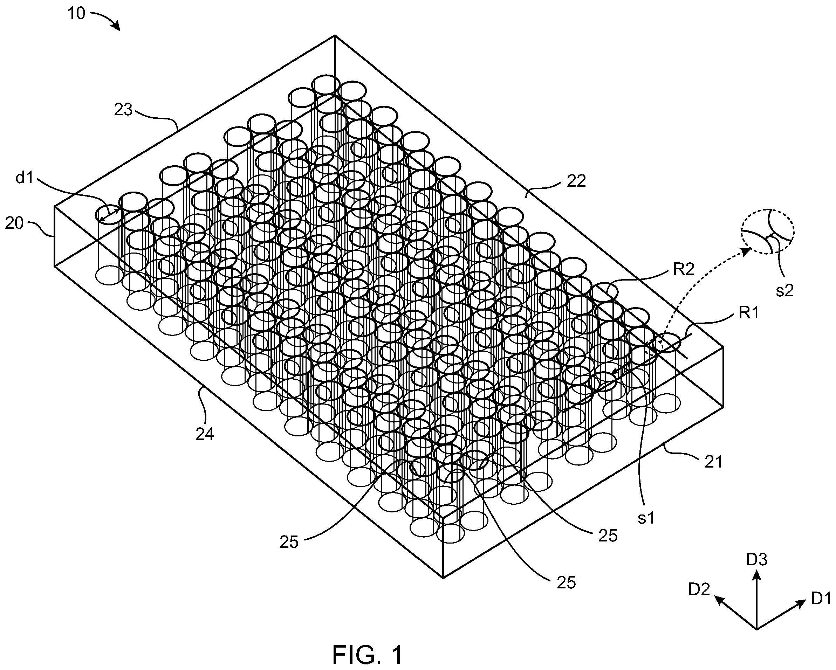

Fig. 1 is a schematic perspective view illustrating a battery cell holder 10 for transport of battery cells according to an embodiment not covered by the appended set of claims. The battery cell holder 10 holds the battery cells during transport, i.e. acts as a battery cell transport unit 10. The transport of battery cells is usually required since the manufacturing of the battery cells is performed at a different location as the manufacturing of the battery back.

The battery cell holder 10 comprises a plate 20. The plate 20 may have a rectangular cross section as shown in Fig. 1. For example, the plate 20 may comprise a first side panel 21 extending in a first direction D1 (e.g. x-direction) and a second side panel 22 extending into a second direction D2 (e.g. y-direction). Further, the plate 20 may comprise a third side panel 23 that extends parallel to the first side panel 21 and fourth side panel 24 which extends parallel to the second side panel 22. The plate 20 may extend into the third direction (e.g. z-direction) by a predefined height. In additional embodiments of the invention, the shape of the plate 20 may be a square cross section, for example.

The plate 20 includes a plurality of first holes 25. The first holes 25 may be through holes which penetrate through the plate 20 in the third direction D3. Preferably, the first holes 25 may have a predefined depth which is smaller than the height of the plate 20.

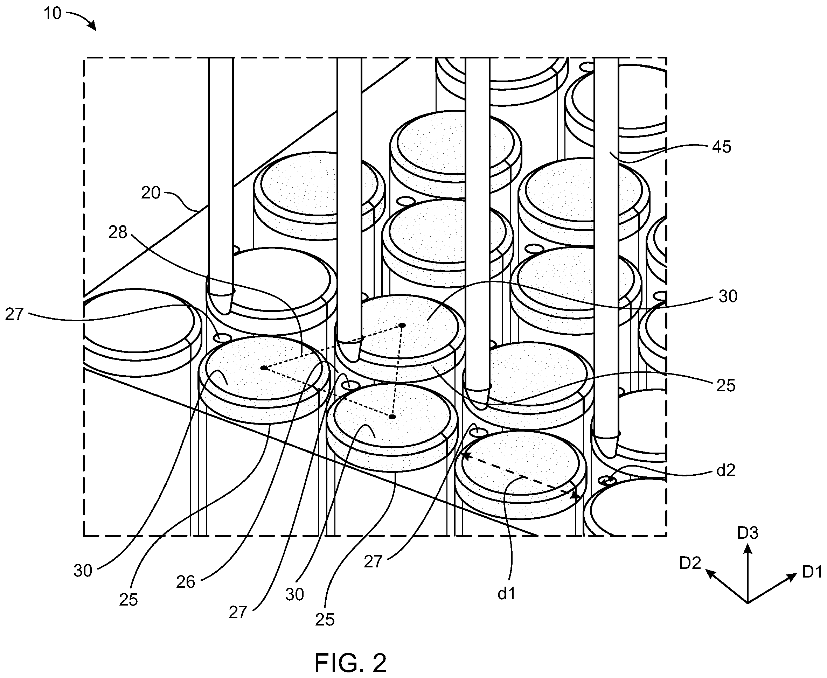

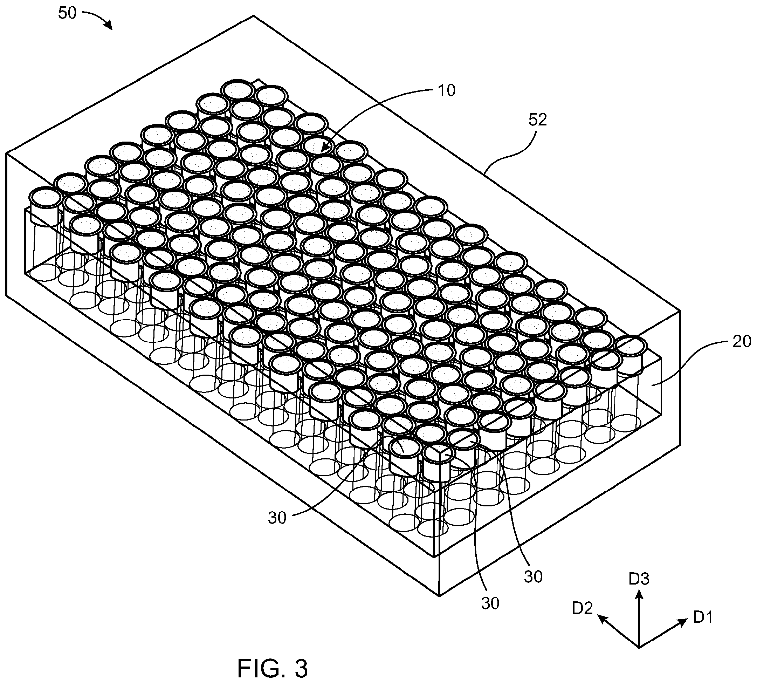

The battery cell holder 10 includes a plurality of battery cells 30, not explicitly shown here but can be seen in Figs. 2 and 3. The battery cells 30 are inserted into the first holes 25, i.e. the battery cells 30 disposed in the first holes 25. At least a portion of each battery cell 30 is inserted into a corresponding first hole 25. When the height of the first hole 25 is less than the height of the plate 20, the battery cells 30 can be seated in the first holes 25.

The material of the plate 20 is a foam, i.e., a foam material which is compressible. The foam material provides safety during transport, since it absorbs vibration and prevents damage of the battery cells. The battery cell holder 10 stabilizes and protects the battery cells 30 during transport and can be reused in a battery pack as described below and the battery cell holder 10 does not have to be modified also in the process of the manufacturing of the battery pack.

The first holes 25, as shown in the Figure 1, are circular such that cylindrical battery cells 30 as shown in the Figs. 2 and 3 can be inserted into the first holes 25. The foam material surrounds each of the first holes 25 such that each of the battery cells 30 are in direct contact only with foam material.

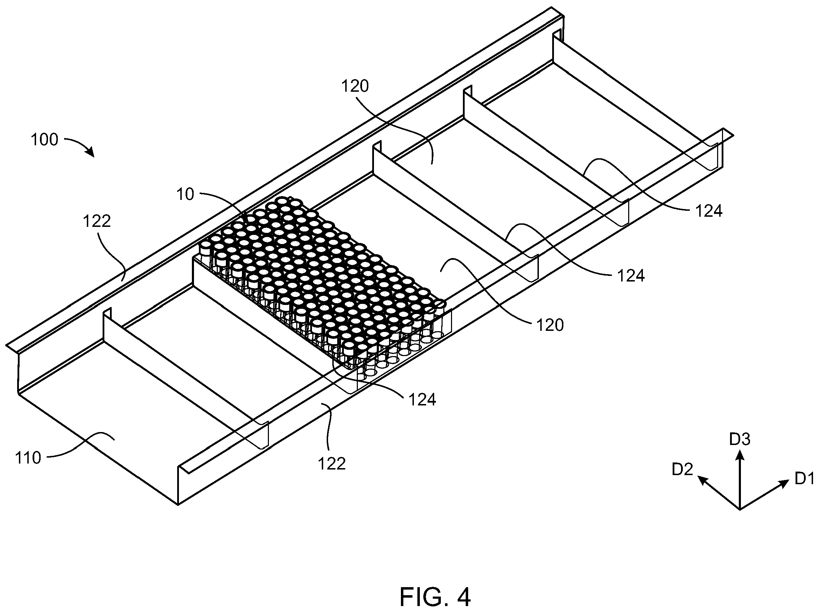

The first holes 25 may be arranged in a predetermined manner. In particular, the first holes 25 may form a lattice or a grid in the foam plate 20. An example is shown in Fig. 1. In particular, the first holes 25 may be pre-arranged in a manner as required for the positioning in a battery pack 100 as shown for example in Fig. 4. That means that already the desired configuration of battery cells 30 can be configured by the battery cell holder 10 for example to electrically interconnect the battery cells 30 and to connect the battery cells to busbars in a particular predetermined manner.

For example, as shown in Fig. 1, the first holes 25 may be arranged in a plurality of rows in a first direction D1 of the plate 20, and a plurality of rows in a second direction D2 of the plate 20. The first holes 25 may be partitioned in subsets to provide a creepage distance in one of the directions D1, D2.

For example, in the present case, two or more subsets of first holes 25 are separated from each other in the direction of the first row R1 by a first hole-to-hole distance S1. Such configuration is shown in the lower right corner. This first hole-to-hole distance S1 may be larger than a second hole-to-hole distance S2 of the first holes within each subset. The first hole-to-hole distance S1 thus may act as creepage distance for electrical security. In this particular example, the subsets are pairs of holes as seen in Fig. 1 in the lower right corner, but the invention is not restricted thereto. This arrangement of first holes 25 is suitable for providing a parallel connection separated by the first hole-to-hole distance S1. However, the invention is not restricted to the particular arrangement of the first holes 25 as shown in Fig. 1.

Thus, already at level of battery cell holder 10 for transport of battery cells, a particular positioning can be predetermined, i.e. designed and oriented in a manner that the battery cell holder 10 can be readily used to provide the battery pack 100 of desired electrical configuration.

Fig. 2 is a partial enlarged perspective view of a battery cell holder 10 for transport of battery cells according to an embodiment of the invention. Only the differences to Fig. 1 will be described in the following and for equal features it is herewith referred to the description of above Fig. 1.

The plate 20 includes a plurality of second holes 27 having a second diameter d2 less than a first diameter d1 of the first holes 25. The second holes 27 may be arranged in at least one row, here in this example in the second direction D2.

The second holes 27 are configured to absorb an adhesive. Thus, an adhesive is disposed in the second holes 27. For example, the adhesive may be injected by an injection device comprising an injection nozzle 45 through which the adhesive is injected into the second holes 27.

Then, when the battery cell holder 10 is compressed, i.e., when foam plate 20 is compressed for inserting in a battery pack, the adhesive penetrates into and through the foam material thus providing stability and bonding in response to the compression. In particular, when the adhesive is a liquid, it may permeate through the matrix of the foam material upon compression. The adhesive may also be a solid configured to melt in response to compression.

As it is shown in Fig. 2, the second holes 27 may be located in an inner space 26 between neighboring first holes 25. Then, the second holes 27 are on a distance to the first holes 25 and the nozzle 45 can be brought in close contact with the second holes 27 despite of the presence of the battery cells 30. In particular, the plurality of first holes 25 in this exemplary embodiment may have a triangular arrangement 28, i.e. there is three neighboring first holes 25 forming a triangle. In other embodiments, a rectangular or square arrangement may be provided by neighboring first holes 25. The second holes 27 are located in the inner space 26 of the triangular arrangement 28. For example, the second holes may be formed essentially equidistant from the three surrounding first holes. In other words, the second holes 27 may be formed at the center. Thus, when the plate 20 is compressed as explained below, the adhesive permeates through the foam material to the neighboring cells to fixate the battery cells 30 in the first holes 25.

Fig. 3 illustrates a schematic perspective view of a battery cell holder 10 for transport of battery cells and a battery cell transport device 50 including the battery cell holder 10 according to an embodiment of the invention. The battery cell holder 10 may correspond to one of the embodiments as disclosed in Fig. 1 or Fig. 2 according to various embodiments therein. The battery cell transport device 50 may comprise additional packaging material formed around the battery cell holder 10. In the present case, a transportation package 52 may be provided, but the invention is not restricted thereto. The battery cell holder 10 may be placed in the transportation package 52, for example a box, or in the packaging material in a compression-free manner. Thus, the foam plate 20 being soft protects the battery cells 30 during transport, i.e. absorbs vibration and therefore provides safe transport of the battery cells 30.

Fig. 4 illustrates a schematic perspective view of a battery pack 100 according to an embodiment of the invention.

The battery pack 100 comprises a carrier 110 including a plurality of compartments 120. The compartment 120 may be configured by a first and second longitudinal members 122. The longitudinal members 122 may extend in parallel, for example in a first direction D1. The compartments 120 are further configured by cross members 124. The cross members 124 may extend in a second direction D2. Thus, rectangular or square compartments 120 are formed.

The battery pack 100 includes a battery cell holder 10 according to one of the above embodiments. The battery cell holder 10 is disposed in one of the compartments 120. The battery pack 100, via the battery cell holder 10, includes the foam plate 20 as part of the battery pack 100 providing stability and support for the battery cells 30 in the battery pack 100. The foam plate 20 therefore does not have to be disposed but is reused for the battery pack 100 which improves as well convenience of manufacture since the battery cells can be inserted into the compartment 120 as a stack using the foam plate 20 with the battery cells 30 instead of inserting individual battery cells by e.g. a robot.

The battery cell holder 10 can be disposed in the compartment 120 such that the compartment 120 exerts a compression force on the battery cell holder 10. Then, the foam material is compressed and thus stiffened so that the battery cells 30 are held in the respective first holes 25 in a more stable manner. Additionally, the compression force causes the adhesive to permeate through the foam material and to provide stability and fixation of the battery cells in the first holes 25

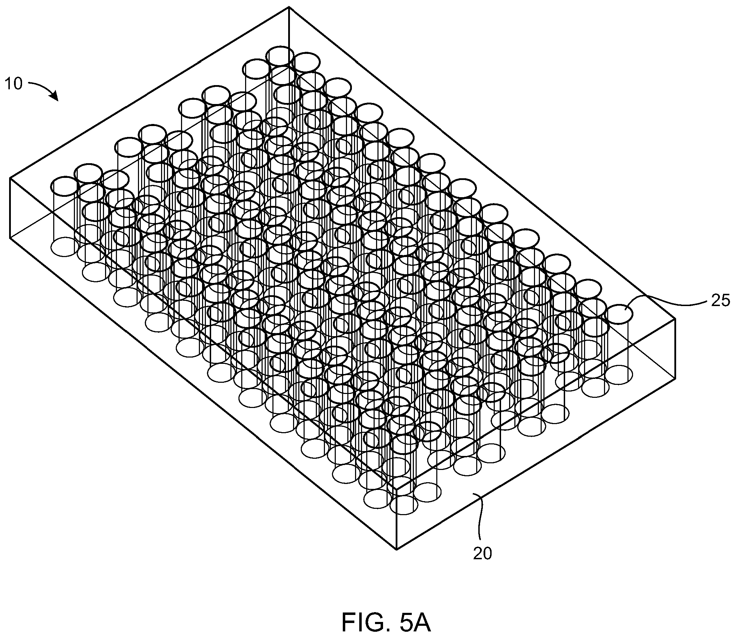

The Figs. 5A-5D illustrate a method of manufacturing a battery pack 100 according to an embodiment of the invention. The battery pack 100 may correspond to the battery pack 100 as described above.

Fig. 5A demonstrates the step of providing at least one battery cell holder 10 for transport of battery cells. The battery cell holder 10 may correspond to one of the above described embodiments and it is referred to the description of the Figs. 1-3. The step may comprise inserting the battery cells 30 into the first holes 25 of the foam plate 20. Further, the step may comprise the injecting or adding of adhesive into the second holes 27, for example by using an injection device including a nozzle 45 to controllably inject the adhesive therein.

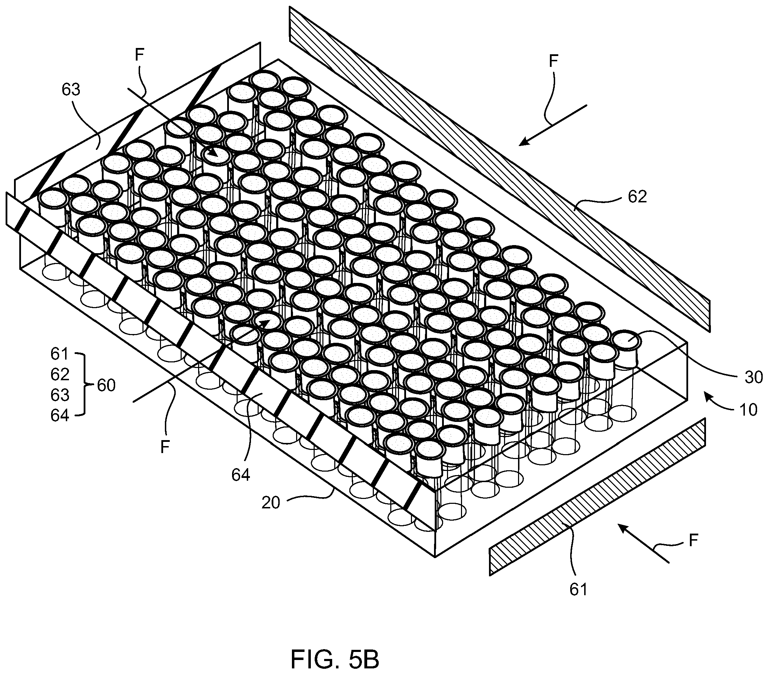

Fig. 5B demonstrates the step of compressing the battery cell holder 10. Due to the compressing of the foam plate 20, the foam plate 20 stiffens and the battery cells 30 may be stabilized and held in the first holes 25 of the foam plate 20 in response to the foam being compressed. Additional, when the adhesive is provided in the second holes 27, the adhesive can permeate through the foam to provide stability and bonding between the individual battery cells 30 and the surrounding foam material.

The compressing of the battery cell holder 10 may be performed by a frame 60, i.e. an assembly frame as schematically shown in Fig. 5B. The frame 60 is pressed against at least two side panels 21, 22, 23, 24 of the plate 20. The frame 60 may include a plurality frame members 61, 62, 63, 64 which together form the frame 60. The frame members 61, 62, 63, 64 may be pressed to the plate 20 in a manner to exert a compression force F on the plate 20. In particular, the frame 60 may compress the plate 20 by pressing on the respective side panels 21, 22, 23, 24 of the plate 20 and exert a compression force F on each of the side panels to provide uniform force on the foam plate 20. The compression may stabilize the battery cells in the compressed foam plate 20 and distributes adhesive through the foam as described above.

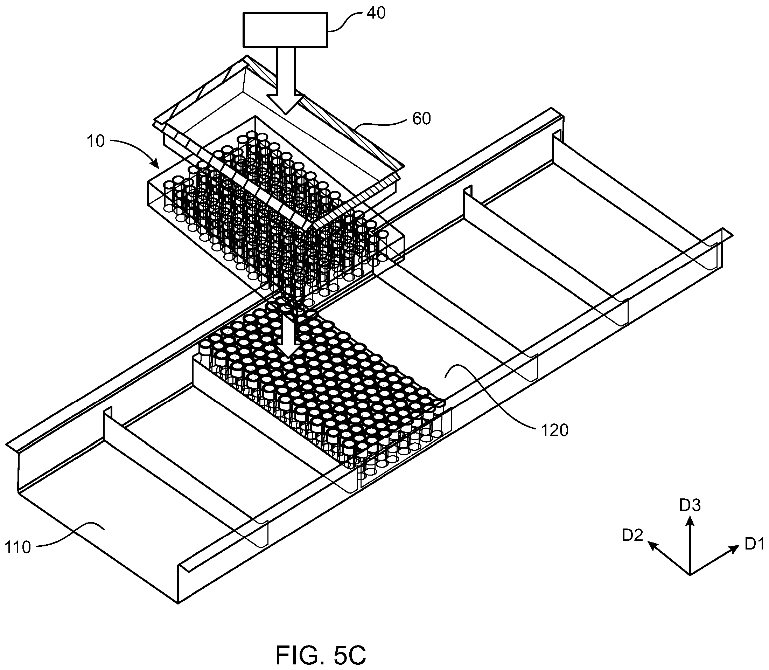

Fig. 5C comprises the step of inserting the compressed battery cell holder 10 into the compartment 120 of the carrier 110. The step may be performed while compressing. For example, inserting may be performed by positioning the battery cell holder 10 above the compartment 120. In a further step the battery cell holder 10 is pressed to be released from the surrounding frame 60 and thereby inserted into the compartment 120. A press tool 40 may be used to exerting a vertical press force. The battery cell holder may be positioned directly above the compartment 120, such that by pressing, the battery cell holder 10 is directly inserted to be compressed by the compartment, i.e. the cross member 124 and longitudinal member 122, without the foam plate 20 restoring from the compressed state.

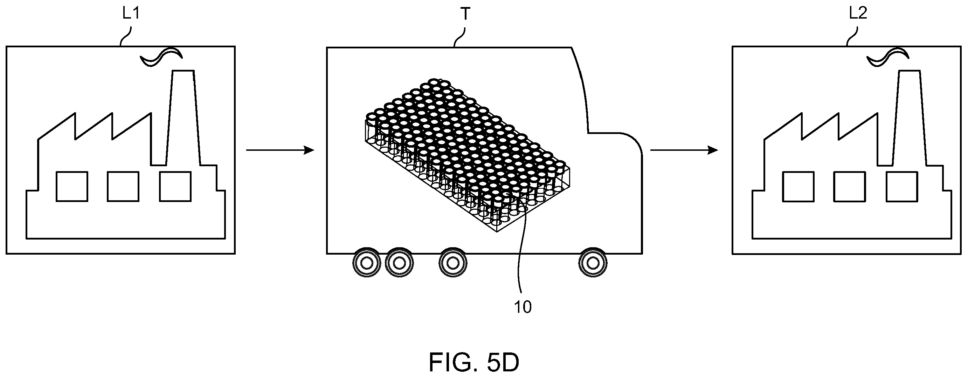

Fig. 5D further illustrates the method steps according to embodiments of the present disclosure based on locations. In particular, the step of providing the at least one battery cell holder 10 may be performed at a first location L1. The step may comprise inserting the battery cells 30 into the first holes 25 of the foam plate 20 at the first location L1. The first location L1 may be a battery cell factory at which the battery cells are manufactured.

In a further step, the method comprises the step of transporting of the battery cell holder 10 by a transport vehicle T to a second location L2 which is different from the first location L1. The transport may be performed as a battery transport device 50 as described above. The second location L2 may be a location at which a battery pack factory is located. A transport by a transport vehicle T may be an air plane, bus, truck, ship.

The step of compressing of the battery cell holder 10 may take place at the second location L2, in particular by using the frame 60 as described above. Then, the battery cells are stably held in the first holes of the foam material in the batter pack 100. Also, the adhesive may be distributed in the foam material before compressing to bond the battery cells in the first holes 25 by the adhesive in the process of compressing. Thus, the transport takes place compression-free and the foam plate 20 being soft acts as transport protection for the battery cells 30
Manufacturing according to the disclosure of the battery pack 100 is more efficient since the foam plate 20 for the transport process can be entirely used for the manufacturing of the battery pack 100. Thus, the plate 20 does not have to be wasted/disposed and the battery cells do not have to be individually removed but can be inserted as a whole.

### Reference signs

- 10: battery cell holder for transport of battery cells / battery cell transport unit

- 20: plate
- 21: first side panel
- 22: second side panel
- 23: third side panel
- 24: fourth side panel

- 25: first hole
- 26: inner space
- 27: second hole
- 28: triangular arrangement

- 30: battery cell
- 40: press tool
- 45: injection nozzle

- 50: battery cell transport device
- 52: transportation package

- 60: frame
- 61: first frame member
- 62: second frame member
- 63: third frame member
- 64: fourth frame member

- 100: battery pack

- 110: carrier

- 120: compartment
- 122: longitudinal member
- 124: cross member

- d1: first diameter
- d2: second diameter

- S1: first hole-to-hole distance
- S2: second hole-to-hole distance

- L1: first location
- L2: second location

- T: transport vehicle

- D1: first direction
- D2: second direction
- D3: third direction

## Claims

1. A battery cell holder (10) for transport of a plurality battery cells, the battery cell holder (10) comprising:
a plate (20) including a plurality of first holes (25),
a plurality of battery cells (30), wherein at least a portion of each battery cell (30) is inserted into a corresponding first hole (25);
wherein the plate (20) is an open-cell foam plate;
the plate (20) comprises a plurality of second holes (27) having a second diameter (d2) less than a first diameter (d1) of the first holes (25);
**characterized in that**,
an adhesive is disposed in the second holes (27); and
the open-cell foam plate is compressible so that upon compression the adhesive is permeated through the foam material to neighboring battery cells to fixate the battery cells (30) in the first holes (25).

2. Battery cell holder (10) of claim 1, wherein the first holes (25) are circular and the battery cells (30) cylindrical.

3. Battery cell holder (10) of claims 1 to 2, wherein the second holes (27) are located at inner spaces (26) formed by at least three neighboring first holes (25).

4. Battery cell holder (10) of claim 3, wherein the inner space (26) is square, quadrangular or triangular and the second hole (27) is positioned in the center thereof.

5. Battery cell holder (10) of one of the claims 1 to 4, wherein the adhesive is a liquid.

6. Battery cell holder (10) of one of the claims 1 to 4, wherein the adhesive is a solid configured to melt under compression.

7. Battery cell transport device (50), comprising a battery cell holder (10) according to one of the claims 1 to 6.

8. A battery pack (100), comprising:
a carrier (110) including a plurality of compartments (120); and
at least one battery cell holder (10) according to one of the claims 1 to 6, wherein the battery cell holder (10) is disposed in one of the compartments (120).

9. Battery pack (100) according to claim 8, wherein the compartment (120) comprises first and second longitudinal members (122) and cross members (124), wherein the battery cell holder (10) is disposed in the compartment (120) such that the cross members (124) and the first and second longitudinal members (122) of the compartment (120) exert a compression force on the plate (20).

10. A method of manufacturing a battery pack (100) according to one of the claims 8 to 9, comprising the steps of:
a) providing at least one battery cell holder (10) according to one of the claims 1 to 6;
b) compressing the battery cell holder (10);
c) inserting the compressed battery cell holder (10) into the compartment (120).

11. The method of claim 10, wherein the plate (20) comprises side panels (21, 22, 23, 24), and the compressing of the battery cell holder (10) is performed by a frame (60) that presses against at least two of the side panels (21, 22, 23, 24) of the plate (20).

12. The method of claim 11, further comprising the step of positioning the battery holder (10) above the compartment (120) and pressing the battery cell holder (10) to release the battery cell holder (10) from the frame (60) and to insert the battery cell holder (10) in the compartment (120).

13. The method of one of the claims 10 to 12, wherein the step of providing at least one battery cell holder (10) is performed at a first location (L1) and wherein the method comprises the step of transporting the battery cell holder (10) by a transport vehicle (T) to a second location (L2) different from the first location (L1) to perform step c) at the second location (L2).

14. The method of claim 13, wherein the step of compressing the battery cell holder (10) is performed at the second location (L2).

15. A vehicle including a battery pack (100) according to one of the claims 8 to 9.

## Patentansprüche

1. Batteriezellenhalterung (10) zum Transport einer Mehrzahl von Batteriezellen, wobei die Batteriezellenhalterung (10) Folgendes umfasst:
eine Platte (20) mit einer Mehrzahl von ersten Löchern (25),
eine Mehrzahl von Batteriezellen (30), wobei zumindest ein Abschnitt jeder Batteriezelle (30) in ein entsprechendes erstes Loch (25) eingebracht ist;
wobei die Platte (20) eine offenzellige Schaumstoffplatte ist;
wobei die Platte (20) eine Mehrzahl von zweiten Löchern (27) umfasst, die einen zweiten Durchmesser (d2) aufweisen, der kleiner als ein erster Durchmesser (d1) der ersten Löcher (25) ist;
**dadurch gekennzeichnet, dass**
ein Haftmittel in den zweiten Löchern (27) angeordnet ist; und
die offenzellige Schaumstoffplatte komprimierbar ist, sodass das Haftmittel bei Kompression durch das Schaumstoffmaterial hindurch zu benachbarten Batteriezellen vordringt, um die Batteriezellen (30) in den ersten Löchern (25) zu fixieren.

2. Batteriezellenhalterung (10) nach Anspruch 1, wobei die ersten Löcher (25) kreisförmig und die Batteriezellen (30) zylindrisch sind.

3. Batteriezellenhalterung (10) nach Anspruch 1 und 2, wobei sich die zweiten Löcher (27) in Innenräumen (26) befinden, die durch mindestens drei benachbarte erste Löcher (25) ausgebildet sind.

4. Batteriezellenhalterung (10) nach Anspruch 3, wobei der Innenraum (26) quadratisch, viereckig oder dreieckig ist und das zweite Loch (27) in der Mitte desselben positioniert ist.

5. Batteriezellenhalterung (10) nach einem der Ansprüche 1 bis 4, wobei das Haftmittel eine Flüssigkeit ist.

6. Batteriezellenhalterung (10) nach einem der Ansprüche 1 bis 4, wobei das Haftmittel ein Feststoff ist, der dazu ausgestaltet ist, unter Kompression zu schmelzen.

7. Batteriezellentransportvorrichtung (50), umfassend eine Batteriezellenhalterung (10) nach einem der Ansprüche 1 bis 6.

8. Batteriepack (100), umfassend:
einen Träger (110) mit einer Mehrzahl von Fächern (120); und
mindestens eine Batteriezellenhalterung (10) nach einem der Ansprüche 1 bis 6, wobei die Batteriezellenhalterung (10) in einem der Fächer (120) angeordnet ist.

9. Batteriepack (100) nach Anspruch 8, wobei das Fach (120) erste und zweite Längselemente (122) und Querelemente (124) umfasst, wobei die Batteriezellenhalterung (10) derart in dem Fach (120) angeordnet ist, dass die Querelemente (124) und die ersten und zweiten Längselemente (122) des Fachs (120) die Platte (20) mit einer Kompressionskraft beaufschlagen.

10. Verfahren zum Herstellen eines Batteriepacks (100) nach einem der Ansprüche 8 bis 9, folgende Schritte umfassend:
a) Bereitstellen von mindestens einer Batteriezellenhalterung (10) nach einem der Ansprüche 1 bis 6;
b) Komprimieren der Batteriezellenhalterung (10);
c) Einbringen der komprimierten Batteriezellenhalterung (10) in das Fach (120).

11. Verfahren nach Anspruch 10, wobei die Platte (20) Seitenwände (21, 22, 23, 24) umfasst und das Komprimieren der Batteriezellenhalterung (10) durch einen Rahmen (60) erfolgt, der gegen mindestens zwei der Seitenwände (21, 22, 23, 24) der Platte (20) drückt.

12. Verfahren nach Anspruch 11, ferner umfassend einen Schritt des Anordnens der Batteriehalterung (10) über dem Fach (120) und Pressen der Batteriezellenhalterung (10), um die Batteriezellenhalterung (10) aus dem Rahmen (60) freizugeben und die Batteriezellenhalterung (10) in das Fach (120) einzubringen.

13. Verfahren nach einem der Ansprüche 10 bis 12, wobei der Schritt des Bereitstellens von mindestens einer Batteriezellenhalterung (10) an einem ersten Ort (L1) durchgeführt wird und wobei das Verfahren einen Schritt des Transportierens der Batteriezellenhalterung (10) durch ein Transportfahrzeug (T) an einen zweiten Ort (L2), der ein anderer ist als der erste Ort (L1), zum Durchführen von Schritt c) an dem zweiten Ort (L2) umfasst.

14. Verfahren nach Anspruch 13, wobei der Schritt des Komprimierens der Batteriezellenhalterung (10) an dem zweiten Ort (L2) durchgeführt wird.

15. Fahrzeug, umfassend ein Batteriepack (100) nach einem der Ansprüche 8 bis 9.

## Revendications

1. Support de cellules de batterie (10) pour le transport d'une pluralité de cellules de batterie, le support de cellules de batterie (10) comportant :
une plaque (20) incluant une pluralité de premiers trous (25),
une pluralité de cellules de batterie (30), dans lequel au moins une partie de chaque cellule de batterie (30) est insérée dans un premier trou (25) correspondant ;
dans lequel la plaque (20) est une plaque de mousse à alvéoles ouvertes ;
la plaque (20) comporte une pluralité de deuxièmes trous (27) ayant un deuxième diamètre (d2) inférieur à un premier diamètre (d1) des premiers trous (25) ;
**caractérisé en ce que**,
un adhésif est disposé dans les deuxièmes trous (27) ; et
la plaque de mousse à alvéoles ouvertes est compressible de sorte que, lors de la compression, l'adhésif s'infiltre dans le matériau de mousse jusqu'aux cellules de batterie voisines pour fixer les cellules de batterie (30) dans les premiers trous (25).

2. Support de cellules de batterie (10) selon la revendication 1, dans lequel les premiers trous (25) sont circulaires et les cellules de batterie (30) cylindriques.

3. Support de cellules de batterie (10) selon les revendications 1 à 2, dans lequel les deuxièmes trous (27) sont situés au niveau d'espaces intérieurs (26) formés par au moins trois premiers trous (25) voisins.

4. Support de cellules de batterie (10) selon la revendication 3, dans lequel l'espace intérieur (26) est carré, quadrangulaire ou triangulaire et le deuxième trou (27) est positionné au centre de celui-ci.

5. Support de cellules de batterie (10) selon l'une des revendications 1 à 4, dans lequel l'adhésif est un liquide.

6. Support de cellules de batterie (10) selon l'une des revendications 1 à 4, dans lequel l'adhésif est un solide configuré pour fondre sous compression.

7. Dispositif de transport de cellules de batterie (50), comportant un support de cellules de batterie (10) selon l'une des revendications 1 à 6.

8. Bloc-batterie (100), comportant :
un élément de support (110) incluant une pluralité de compartiments (120) ; et
au moins un support de cellules de batterie (10) selon l'une des revendications 1 à 6, dans lequel le support de cellules de batterie (10) est disposé dans l'un des compartiments (120).

9. Bloc-batterie (100) selon la revendication 8, dans lequel le compartiment (120) comporte de premier et deuxième longerons (122) et des traverses (124), dans lequel le support de cellules de batterie (10) est disposé dans le compartiment (120) de sorte que les traverses (124) et les premier et deuxième longerons (122) du compartiment (120) exercent une force de compression sur la plaque (20).

10. Procédé de fabrication d'un bloc-batterie (100) selon l'une des revendications 8 à 9, comportant les étapes suivantes :
a) la fourniture d'au moins un support de cellules de batterie (10) selon l'une des revendications 1 à 6 ;
b) la compression du support de cellules de batterie (10) ;
c) l'insertion du support de cellules de batterie (10) compressé dans le compartiment (120).

11. Procédé selon la revendication 10, dans lequel la plaque (20) comporte des panneaux latéraux (21, 22, 23, 24), et la compression du support de cellules de batterie (10) est réalisée par un cadre (60) qui appuie contre au moins deux des panneaux latéraux (21, 22, 23, 24) de la plaque (20).

12. Procédé selon la revendication 11, comportant en outre l'étape de positionnement du support de batterie (10) au-dessus du compartiment (120) et de pressage du support de cellules de batterie (10) pour libérer le support de cellules de batterie (10) du cadre (60) et pour insérer le support de cellules de batterie (10) dans le compartiment (120).

13. Procédé selon l'une des revendications 10 à 12, dans lequel l'étape de fourniture d'au moins un support de cellules de batterie (10) est réalisée à un premier emplacement (L1) et dans lequel le procédé comporte l'étape de transport du support de cellules de batterie (10) par un véhicule de transport (T) vers un deuxième emplacement (L2) différent du premier emplacement (L1) pour réaliser l'étape c) au deuxième emplacement (L2).

14. Procédé selon la revendication 13, dans lequel l'étape de compression du support de cellules de batterie (10) est réalisée au deuxième emplacement (L2).

15. Véhicule incluant un bloc-batterie (100) selon l'une des revendications 8 à 9.
